# FASCICULE DE BREVET EUROPEEN

(11) **EP 2 689 398 B1**
(45) Date de publication et mention de la délivrance du brevet: **15.12.2021**
(21) Numéro de dépôt: 12717372.2
(22) Date de dépôt: 23.03.2012
(51) Int. Cl.: G07C 5/08

(54) **VERIFICATION DE L'INTEGRITE DE DONNEES D'UN EQUIPEMENT EMBARQUE DANS UN VEHICULE**
PRÜFUNG DER DATENINTEGRITÄT EINER VORRICHTUNG AN BORD EINES FAHRZEUGS
CHECKING THE INTEGRITY OF DATA OF AN APPARATUS ONBOARD A VEHICLE

(30) Priorité: 25.03.2011 FR 1152491
(43) Date de publication de la demande: 29.01.2014
(73) Titulaire: ORANGE, 92130 Issy-les-Moulineaux (FR)
(72) Inventeur: BODIN, Pascal, F-06130 Grasse (FR); CHAMBON, Jacques, F-06130 Grasse (FR)
(74) Mandataire: Cabinet Beau de Loménie
(86) Numéro de dépôt international: PCT/FR2012/050615
(87) Numéro de publication internationale: WO 2012/131245

(56) Documents cités:
- EP-A1- 2 259 231
- DE-A1-102008 048 162
- US-A1- 2002 120 856
- US-A1- 2009 327 760
- US-A1- 2010 004 813
- US-A1- 2010 250 053
- US-A1- 2010 322 423

## Description

### Arrière-plan de l'invention

L'invention se rapporte au domaine général des véhicules équipés d'un équipement embarqué pour la gestion de flottes de véhicules.

Les applications de gestion de flottes de véhicules sont maintenant courantes. Les services offerts sont notamment le positionnement du véhicule, la remontée des positions vers un site central, l'envoi de missions à un véhicule depuis le site central, etc. Ce type d'application utilise un équipement embarqué dans le véhicule qui contient par exemple un dispositif de positionnement par satellite et qui peut communiquer avec le site central.

Dans certaines applications, il est nécessaire d'assurer l'intégrité des données générées par l'équipement embarqué. On peut par exemple penser aux fonctions ayant pour but de vérifier les parcours effectués, ou le type d'utilisation du véhicule. Pour assurer l'intégrité des données, il est connu d'utiliser un mécanisme cryptographique à clés asymétriques. On sait cependant que ce type de mécanisme nécessite des moyens importants, notamment pour la distribution des clés privées et la configuration des équipements.

Par ailleurs, l'installation d'un chronotachygraphe électronique est obligatoire dans tout camion neuf de plus de 3,5 tonnes. Lorsque des données sont extraites d'un chronotachygraphe électronique par le connecteur en face avant, elles sont signées. Cette signature, reposant sur un mécanisme cryptographique à clés asymétriques, permet de s'assurer de l'authentification des données (elles proviennent bien du chronotachygraphe concerné) et de leur intégrité (elles n'ont pas été modifiées par rapport à ce qu'elles étaient lors de leur génération dans le chronotachygraphe).

US2009327760 A1 décrit un tachygraphe avec une unité de lecture de carte à puce, le tachygraphe comportant une unité fonctionnelle cryptographique. US2010004813 A1 décrit un procédé de transmission de données entre un tachygraphe et un dispositif de traitement de données. EP2259231 divulgue un tachygraphe numérique et un procédé d'enregistrement de données liées au véhicule.

### Objet et résumé de l'invention

L'invention vise à faciliter la lutte contre la fraude relative à un équipement embarqué sur un véhicule. En particulier, l'invention vise à permettre la vérification de l'intégrité des données d'un équipement embarqué, en évitant au moins certains des inconvénients précités de l'art antérieur.

A cet effet, l'invention est telle que définie dans les revendications indépendantes.

Grâce à l'utilisation du module de signature du chronotachygraphe, les données générées par l'équipement embarqué peuvent être signées sans nécessiter une clé privée et un module de signature spécifiques à l'équipement embarqué. Autrement dit, l'invention permet de mutualiser l'infrastructure liée au mécanisme cryptographique à clés asymétriques du chronotachygraphe. Il n'est pas nécessaire de distribuer des clés privées spécifiques aux équipements embarqués d'une flotte de véhicules.

On simplifie donc la réalisation de l'équipement embarqué qui doit fournir des données signées en utilisant à cet effet les moyens de signature déjà présents dans le chronotachygraphe.

L'invention suppose une modification du chronotachygraphe pour qu'il puisse, non seulement transmettre des données signées, obtenues à partir de données de mesure générées par ce chronotachygraphe, mais en outre recevoir des données à signer (quelle que soit leur nature, mesures ou autres données) et fournir en retour des données signées avec la signature correspondante. Le protocole de communication avec le chronotachygraphe doit notamment être modifié afin de prendre en compte cette fonction nouvelle et de dialoguer de manière adéquate avec le chronotachygraphe.

Selon une première variante de réalisation non revendiquée, la communication pour l'envoi au chronotachygraphe des données à signer se fera via le connecteur en face avant servant usuellement à l'extraction des données générées par ce chronotachygraphe, le chronotachygraphe fournissant en retour des données signées avec la signature correspondante via ce même connecteur.

Selon une deuxième variante de réalisation non revendiquée, la communication pour l'envoi au chronotachygraphe des données à signer se fera via une autre interface de communication qui serait disponible sur le chronotachygraphe. Ceci permet de ne pas interférer avec le processus d'extraction des données générées par ce chronotachygraphe qui se fait usuellement via le connecteur en face avant. Dans cette deuxième variante de réalisation, le chronotachygraphe fournira en retour des données signées avec la signature correspondante via cette même interface.

Dans ces deux variantes de réalisation, on constate donc qu'il est possible d'exploiter une interface de communication déjà présente sur le chronotachygraphe pour la mise en oeuvre de l'invention.

Le dispositif de vérification permet à un tiers de prendre connaissance des données et de la signature, ce qui lui permet de vérifier l'intégrité des données. Le dispositif de vérification peut par exemple se trouver sur le site central d'une entreprise de transport ou être un dispositif portable utilisé sur les routes par une personne responsable du contrôle.

Comme l'équipement embarqué et le chronotachygraphe sont deux dispositifs distincts, le dispositif de vérification peut communiquer directement avec l'équipement embarqué et le chronotachygraphe. L'équipement embarqué et le chronotachygraphe peuvent être conçus et installés séparément. Par exemple, ils peuvent provenir de constructeurs différents.

Les avantages précités discutés en rapport à l'équipement embarqué et au véhicule s'appliquent de manière correspondante aux procédés précités.

Selon un mode de réalisation du procédé de mémorisation, l'étape d'envoi de données comprend l'envoi vers le chronotachygraphe électronique d'au moins un message de demande de soumission de données, accompagné d'au moins une partie des données à signer.

Dans un mode de réalisation, l'étape d'envoi de données comprend l'envoi vers le chronotachygraphe électronique d'un message de demande de transfert de signature pour les données envoyées avec ledit au moins un message de demande de soumission de données.

Le message de demande de transfert de signature et le message de demande de soumission de données peuvent être le même message ou des messages différents.

Selon un mode de réalisation non revendiquée du procédé de mémorisation le format du message de demande de soumission de données et/ou du message de demande de signature de données est conforme au protocole normalisé décrit dans l'annexe 1B du règlement CEE n° 3821/85, l'octet « PDT » dudit message présentant une valeur (PTD_{S}, PDT_{D}) non définie dans ledit protocole normalisé.

De manière correspondante, selon un mode de réalisation non revendiquée du procédé de signature, l'étape de réception de données comprend la réception d'au moins un message de format conforme au protocole normalisé décrit dans l'annexe 1B du règlement CEE n° 3821/85, l'octet « PDT » dudit message présentant une valeur non définie dans ledit protocole normalisé.

L'invention vise aussi un programme d'ordinateur comportant des instructions pour l'exécution des étapes du procédé de mémorisation ou du procédé de signature ci-dessus lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un schéma d'un véhicule selon un mode de réalisation de l'invention et d'un dispositif de vérification,
- la figure 2 représente schématiquement l'équipement embarqué du véhicule de la figure 1,
- la figure 3 représente schématiquement le chronotachygraphe électronique du véhicule de la figure 1,
- la figure 4 représente schématiquement le dispositif de vérification de la figure 1,
- la figure 5 représente le déroulement d'une communication entre le véhicule et le dispositif de vérification de la figure 1, et
- les figures 6 et 7 représentent de manière plus détaillée le déroulement d'une communication entre l'équipement embarqué et le chronotachygraphe du véhicule de la figure 1.

### Description détaillée d'un mode de réalisation

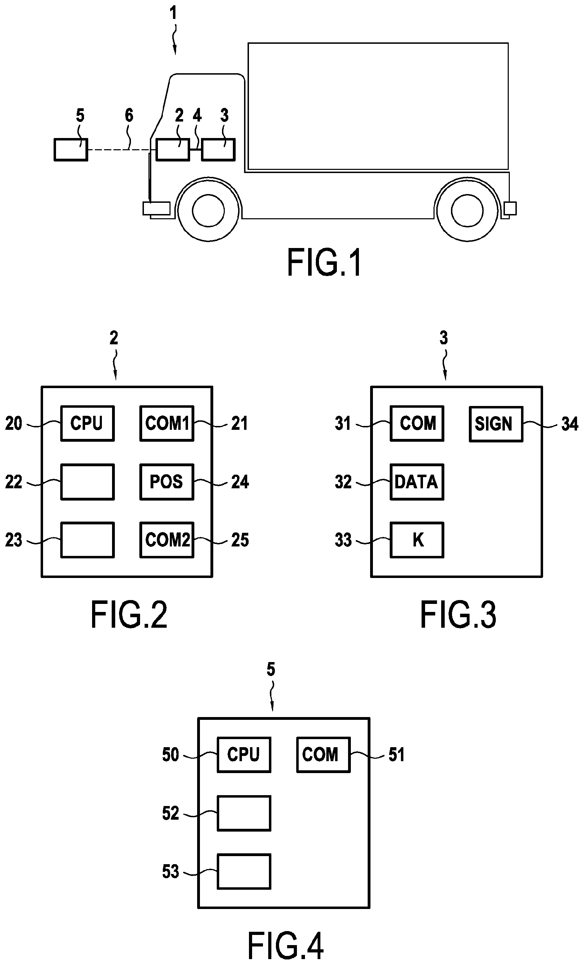

La **figure 1** représente un véhicule 1 poids-lourd équipé d'un équipement 2 embarqué et d'un chronotachygraphe 3 électronique. L'équipement 2 et le chronotachygraphe 3 peuvent communiquer par une liaison 4. La figure 1 représente également un dispositif de vérification 5 qui peut communiquer avec l'équipement 2 par une liaison 6.

L'équipement 2 permet la mise en œuvre d'applications de gestion de flottes de véhicules. Ainsi, l'équipement 2 peut communiquer avec un site central (non représenté) par exemple pour le positionnement du véhicule 1, la remontée des positions vers le site central, l'envoi de missions au véhicule 1 depuis le site central, etc.

L'équipement 2 est représenté schématiquement sur la **figure 2****.** Il comprend notamment un microprocesseur 20, une interface de communication 21, une mémoire non-volatile 22, une mémoire volatile 23, un dispositif de positionnement 24 et une interface de communication 25. Le microprocesseur 20 permet d'exécuter de programmes mémorisés dans la mémoire non-volatile 22, en utilisant la mémoire volatile 23. L'interface de communication 21 permet à l'équipement 2 de communiquer avec le chronotachygraphe 3 par la liaison 4, qui est par exemple une liaison filaire. Le dispositif de positionnement 24 est par exemple un dispositif de positionnement par satellite de type GPS, Glonass, Galileo, etc. Il est capable de générer des données de position, de vitesse instantanée, de date et d'heure. Les données générées par le dispositif de positionnement 24 peuvent être mémorisées dans la mémoire non-volatile 22 ou la mémoire volatile 23. L'interface de communication 25 permet à l'équipement 2 de communiquer avec le dispositif de vérification 5 ou avec le site central, par la liaison 6. La liaison 6 peut être une liaison filaire ou sans fils.

La **figure 3** représente le chronotachygraphe 3, qui est un chronotachygraphe électronique dont l'installation est obligatoire dans tout camion neuf de plus de 3,5 tonnes. Le chronotachygraphe 3 comprend notamment une interface de communication 31, un enregistreur 32, une mémoire 33 contenant une clé privée K et un module de signature 34.

L'enregistreur 32 enregistre en permanence de nombreuses informations : identité du conducteur, durée de conduite, distance parcourue, vitesse instantanée, vitesse moyenne, vitesse maximale, etc.

L'interface de communication 31 comprend un connecteur normalisé, situé en face avant et relié à l'équipement 2 par la liaison 4, qui permet l'accès aux données enregistrées. L'accès aux données se fait normalement en utilisant une carte à puce dite « *carte entreprise »,* qui permet d'accéder à toutes les données concernant les conducteurs de l'entreprise concernée. Il est toutefois possible d'accéder aux données sans la carte entreprise. Simplement, certaines données nominatives sont alors masquées.

Le module de signature 34 est apte à mettre en œuvre un mécanisme cryptographique à clés asymétriques, en utilisant la clé K. La clé K est une clé privée associée à une clé publique K_{pub}. Le module de signature 34 correspond par exemple à un programme d'ordinateur exécuté par un processeur (non représenté) du chronotachygraphe 3, à un circuit électronique spécifique (par exemple de type circuit logique programmable), ou à une combinaison d'un programme d'ordinateur et d'un circuit spécifique.

Lorsque des données de l'enregistreur 32 sont extraites du chronotachygraphe 3 par le connecteur en face avant, elles sont signées par le module de signature 34, en utilisant la clé K. Cette signature, permet de s'assurer de l'authentification des données (elles proviennent bien du chronotachygraphe concerné) et de leur intégrité (elles n'ont pas été modifiées par rapport à ce qu'elles étaient lors de leur génération dans le chronotachygraphe).

Le dispositif de vérification 5 est représenté schématiquement sur la **figure 4****.** Il comprend notamment un microprocesseur 50, une interface de communication 51, une mémoire non-volatile 52 et une mémoire volatile 53. Le microprocesseur 50 permet d'exécuter des programmes mémorisés dans la mémoire non-volatile 52, en utilisant la mémoire volatile 53. L'interface de communication 51 permet au dispositif de vérification 5 de communiquer avec l'équipement 2 par la liaison 6.

Le dispositif de vérification 5 peut par exemple être situé sur le site central d'une entreprise de transport ou être un dispositif portatif utilisé sur les routes par une personne responsable du contrôle des véhicules en circulation, par exemple un agent chargé de vérifier l'application de la réglementation en vigueur.

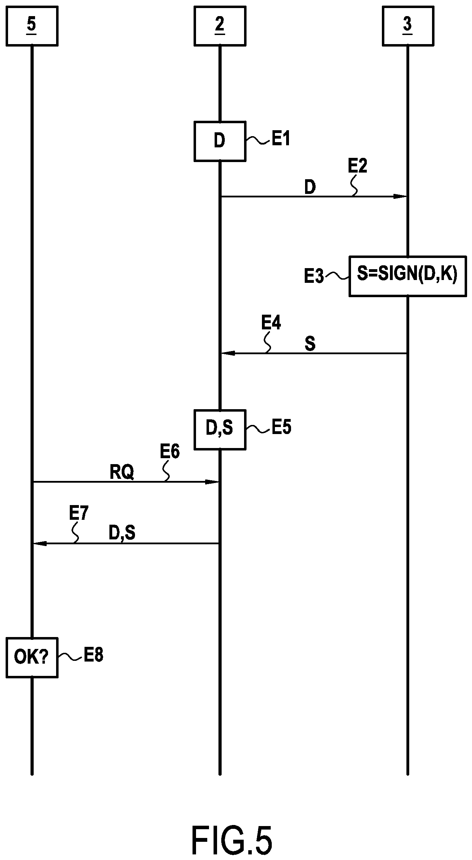

La **figure 5** représente le déroulement d'une communication entre l'équipement 2, le chronotachygraphe 3 et le dispositif de vérification 5.

Initialement, l'équipement 2 génère des données, notées données D (étape E1). Il s'agit des données générées par le dispositif de positionnement 24. Ensuite, l'équipement 2 envoie les données D au chronotachygraphe 3 (étape E2).

En réponse à la réception des données D, le chronotachygraphe 3 détermine, en utilisant le module de signature 34 et la clé K, une signature des données D, notée signature S (étape E3). Le chronotachygraphe 3 envoie la signature S à l'équipement 2 embarqué (étape E4).

En réponse à la réception de la signature S, l'équipement 2 embarqué mémorise les données D et la signature S (étape E5), par exemple dans la mémoire non-volatile 22.

Ultérieurement, le dispositif de vérification 5 envoie une requête RQ à l'équipement 2 (étape E6). En réponse à la réception de la requête RQ, l'équipement 2 embarqué envoie les données D et la signature S au dispositif de vérification 5 (étape E7). Toutefois, l'étape E6 (envoi de la requête RQ) n'est pas forcément présente : l'équipement 2 peut, dans certaines applications, décider de lui-même d'envoyer ses données au dispositif de vérification 5, par exemple lorsque sa mémoire est presque pleine.

Ensuite, le dispositif de vérification 5 vérifie l'intégrité des données D en fonction de la signature S et de la clé publique K_{pub} associée à la clé K.

En l'absence de fraude, les données D générées à l'étape E1 et transmises au chronotachygraphe 3 sont les mêmes que les données D transmises au dispositif de vérification 5 à l'étape E7. Ainsi, à l'étape E8, le dispositif de vérification 5 constate que les données D et la signature S correspondent et conclut donc à l'intégrité des données.

Par contre, en cas de fraude, par exemple en cas de modification des données D mémorisées à l'étape E5 avant leur transmission à l'étape E7, les données D générées à l'étape E1 et transmises au chronotachygraphe 3 ne sont pas les mêmes que les données D transmises au dispositif de vérification 5 à l'étape E7. Ainsi, à l'étape E8, le dispositif de vérification 5 constate que les données D et la signature S ne correspondent pas et conclut donc à la non-intégrité des données.

Grâce à l'utilisation du module de signature 34 et de la clé K du chronotachygraphe 3, les données D générées par l'équipement 2 embarqué peuvent être signées sans nécessiter une clé privée et un module de signature spécifiques à l'équipement embarqué. Autrement dit, l'invention permet de mutualiser l'infrastructure liée au mécanisme cryptographique à clés asymétriques du chronotachygraphe. Il n'est pas nécessaire de distribuer des clés privées spécifiques aux équipements embarqués d'une flotte de véhicules.

Les étapes de génération des données D (E1), d'envoi des données D (E2), de réception de la signature S (E4), de mémorisation des données D et de la signature S (E5), de réception de la requête RQ (E6) et d'envoi des données D et de la signature S (E7) sont les principales étapes d'un procédé de mémorisation conforme à l'invention, mis en œuvre par l'équipement 2 embarqué. Ce procédé de mémorisation correspond par exemple à un programme d'ordinateur mémorisé dans la mémoire non-volatile 22 et exécuté par l'équipement 2.

De manière similaire, les étapes de réception des données D (E2), de détermination de la signature S (E3) et d'envoi de la signature S (E4) sont les principales étapes d'un procédé de signature conforme à l'invention, mis en œuvre par le chronotachygraphe 3. Ce procédé de signature correspond par exemple à un programme d'ordinateur mémorisé dans la mémoire 33 et exécuté le chronotachygraphe 3.

De manière similaire également, les étapes d'envoi de la requête RQ (E6), de réception des données D et de la signature S (E7) et de vérification (E8) sont les principales étapes d'un procédé de vérification, mis en œuvre par le dispositif de vérification 5. Ce procédé de mémorisation correspond par exemple à un programme d'ordinateur mémorisé dans la mémoire non-volatile 52 et exécuté par le dispositif de vérification 5.

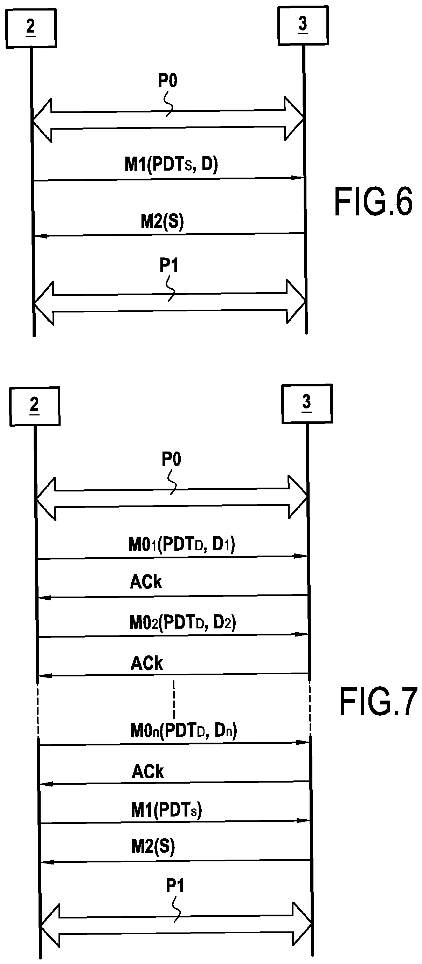

En référence aux figures 6 et 7, on décrit maintenant de manière plus détaillée la communication entre l'équipement 2 et le chronotachygraphe 3, c'est-à-dire les étapes E2 et E4, dans le cas où cette communication est effectuée selon une version modifiée du protocole normalisé décrit dans l'annexe 1B du règlement CEE n° 3821/85.

De manière connue, l'annexe 1B du règlement CEE n° 3821/85 décrit un protocole de communication entre une unité embarquée sur le véhicule (ci-après UEV) et un équipement spécialisé intelligent (ci-après ESI). Après établissement de la communication et ouverture d'une session, les messages envoyés par l'ESI à l'UEV contiennent un champ « INFORMATION » qui comprend un octet « PDT » pour « Paramètre de demande de transfert ». L'octet PDT différencie six types de demandes de transfert. Ainsi, en fonction de la valeur de l'octet PDT, l'UEV réagit de manière correspondante. Les messages envoyés par l'UEV à l'ESI contiennent un champ « INFORMATION » qui comprend un octet « PRT » pour « Paramètre de réponse de transfert ». Le champ « INFORMATION » présente une taille de 254 octets maximum. Ainsi, il peut contenir, outre l'octet PDT ou PRT, 253 octets de données.

Dans un mode de réalisation, la présente invention propose de définir une valeur supplémentaire du champ PDT, notée PDT_{S} et correspondant à une demande de signature, et une valeur supplémentaire du champ PDT, notée PDT_{D} et correspondant à une demande de soumission de données longues. Le chronotachygraphe 2 correspond à l'UEV et l'équipement 2 embarqué correspond à l'ESI.

La **figure 6** représente la communication entre l'équipement 2 et le chronotachygraphe 3, dans le cas de la signature de données D courtes. Par données courtes, on entend des données D dont la taille est inférieure ou égale à 253 octets.

La communication débute par une phase P0 au cours de laquelle l'équipement 2 demande l'établissement d'une communication, l'ouverture d'une session de diagnostic, fait une demande de téléchargement et demande le transfert de données récapitulatives. On suppose que le chronotachygraphe 3 répond positivement à chacune de ces demandes et transmet les données récapitulatives, qui peuvent être décomposées en plusieurs messages. Cette phase P0 se déroule conformément au protocole normalisé précité et n'est donc pas décrite en détail.

Ensuite, l'équipement 2 embarqué envoie un message M1 au chronotachygraphe 3, dans lequel le champ « INFORMATION » comprend l'octet PDT de valeur PDT_{S}, la nouvelle valeur proposée par la présente invention pour la demande de transfert d'une signature, et les données D. En réponse à la réception du message M1, le chronotachygraphe 3 constate que l'octet PDT a la valeur PDT_{S}, et déduit donc qu'il doit signer les données D. Ensuite, il répond par un message M2 contenant la signature S déterminée. La signature S présente typiquement une taille de 128 octet et peut donc être transmise dans le champ « INFORMATION ».

La suite de la communication, pendant une phase P1, comprend notamment une demande de fin de transfert et une demande d'arrêt de la communication. Cette phase P1 se déroule conformément au protocole normalisé précité et n'est donc pas décrite en détail.

La **figure 7** représente la communication entre l'équipement 2 et le chronotachygraphe 3, dans le cas de la signature de données D longues. Par données longues, on entend des données D dont la taille est supérieure à 253 octets.

Comme dans le cas de la figure 6, la communication débute par une phase P0 au cours de laquelle l'équipement 2 demande l'établissement d'une communication, l'ouverture d'une session de diagnostic, fait une demande de téléchargement et demande le transfert de données récapitulatives. On suppose que le chronotachygraphe 3 répond positivement à chacune de ces demandes et transmet les données récapitulatives, qui peuvent être décomposées en plusieurs messages. Cette phase P0 se déroule également conformément au protocole normalisé précité et n'est donc pas décrite en détail.

Ensuite, l'équipement 2 embarqué envoie une succession de messages M0₁, M0₂, ... M0ₙ, au chronotachygraphe 3. Dans chaque message M0ᵢ, le champ « INFORMATION » comprend l'octet PDT de valeur PDT_{D}, la nouvelle valeur proposée par la présente invention pour la demande de soumission de données, et une partie Dᵢ des données D. Ainsi, la fragmentation des données D en une pluralité de parties Dᵢ de taille inférieure ou égale à 253 octets permet la transmission de la totalité des données D. Chaque message M0ᵢ est acquitté par un message ACK.

Ensuite, l'équipement 2 embarqué envoie un message M1 au chronotachygraphe 3, dans lequel, le champ « INFORMATION » comprend l'octet PDT de valeur PDT_{S}, la nouvelle valeur proposée par la présente invention pour la demande de transfert d'une signature. Dans l'exemple décrit, l'octet PDT_{S} est le même dans le cas de données courtes ou de données longues, et le chronotachygraphe 3 peut distinguer les deux cas en fonction des données longues qu'il vient de recevoir. Dans une variante, l'octet PDT envoyé pour demander la signature de données longues est différent de l'octet PDT envoyé pour demander une signature de données courtes.

En réponse à la réception du message M1, le chronotachygraphe 3 constate que l'octet PDT a la valeur PDT_{S}, et déduit donc qu'il doit signer les données D. Ensuite, il répond par un message M2 contenant la signature S déterminée.

La suite de la communication, pendant une phase P1, comprend notamment une demande de fin de transfert et une demande d'arrêt de la communication. Cette phase P1 se déroule conformément au protocole normalisé précité et n'est donc pas décrite en détail.

Sur la figure 6, la transmission du message M1 correspond à l'étape E2 et la transmission du message M2 correspond à l'étape E4 de la figure 5. Sur la figure 7, la transmission des messages M0ᵢ correspond à l'étape E2 et la transmission du message M2 correspond à l'étape E4 de la figure 5.

L'utilisation d'une version modifiée du protocole normalisé précité permet de faciliter la coopération entre équipements embarqués et chronotachygraphes, dont certains prennent en charge la version modifiée du protocole et d'autre uniquement la version normalisée.

## Revendications

1. Procédé de mémorisation de données mis en œuvre par un équipement (2) embarqué dans un véhicule (1), comprenant:
- une étape (E2) d'envoi de données (D) à signer vers un chronotachygraphe électronique (3) embarqué dans ledit véhicule (1), ledit chronotachygraphe électronique (3) et ledit équipement (2) étant des dispositifs distincts, lesdites données (D) comportant des données générées par un dispositif de positionnement (24) compris dans ledit équipement (2) et capable de générer des données (D) de position, de vitesse instantanée, de date et d'heure, ces données (D) de position, de vitesse instantanée, de date et d'heure étant comprises dans lesdites données envoyées,
- une étape (E4) de réception, de la part dudit chronotachygraphe électronique (3), d'une signature (S) desdites données (D),
- une étape (E5) de mémorisation desdites données (D) et de ladite signature, et
- une étape (E7) de transmission des données (D) et de la signature (S) mémorisées vers un dispositif de vérification (5).

2. Procédé de mémorisation selon la revendication 1, dans lequel l'étape (E2) d'envoi de données (D) comprend l'envoi vers le chronotachygraphe électronique (3) d'au moins un message (M₁, M0₁, M0₂, M0ₙ) de demande de soumission de données, accompagné d'au moins une partie des données à signer.

3. Procédé de mémorisation selon la revendication 2, dans lequel l'étape (E2) d'envoi de données (D) comprend l'envoi vers le chronotachygraphe électronique d'un message (M₁) de demande de transfert de signature pour les données envoyées avec ledit au moins un message de demande de soumission de données.

4. Programme d'ordinateur comportant des instructions pour l'exécution des étapes du procédé de mémorisation selon la revendication 1 lorsque ledit programme est exécuté par un ordinateur.

5. Support d'informations lisible par un ordinateur et comprenant des instructions d'un programme d'ordinateur selon la revendication 4.

6. Equipement (2) destiné à être embarqué dans un véhicule (1), comprenant :
- un dispositif de positionnement (24) capable de générer des données (D) de position, de vitesse instantanée, de date et d'heure;
- un module d'envoi de données (D) à signer vers un chronotachygraphe électronique (3) embarqué dans ledit véhicule (1), lesdites données ayant été générées par ledit dispositif de positionnement (24) et comprenant des données (D) de position, de vitesse instantanée, de date et d'heure, ledit chronotachygraphe électronique (3) et ledit équipement (2) étant des dispositifs distincts,
- un module de réception, de la part dudit chronotachygraphe électronique (3), d'une signature (5) desdites données,
- un module de mémorisation desdites données (D) et de ladite signature (5), et
- un module de transmission des données (D) et de la signature (S) mémorisées vers un dispositif de vérification (5).

7. Véhicule comprenant un équipement (2) embarqué selon la revendication 6 et un chronotachygraphe électronique (3) relié audit équipement, et embarqué dans ledit véhicule (1), ce chronotachygraphe comprenant :
- un module de réception, de la part dudit équipement (2), de données (D) à signer, lesdites données ayant été générées par ledit équipement,
- un module (34) de détermination d'une signature (S) desdites données, et
- un module d'envoi de ladite signature (S) vers ledit équipement embarqué ;
ledit équipement (2) étant configuré pour transmettre lesdites données (D) et ladite signature (S) vers un dispositif de vérification (5).

## Patentansprüche

1. Verfahren zum Speichern von Daten, das von einer in einem Fahrzeug (1) verbauten Anlage (2) ausgeführt wird und Folgendes umfasst:
- einen Schritt (E2) des Schickens von zu signierenden Daten (D) eines in einem Fahrzeug (1) verbauten elektronischen Fahrtenschreibers (3), wobei der Fahrtenschreiber (3) und die Anlage (2) verschiedene Vorrichtungen sind, wobei die Daten (D) Daten enthalten, die von einer Positionierungsvorrichtung (24) erzeugt werden, die in der Anlage (2) enthalten ist und Daten (D) über die Position, die aktuelle Geschwindigkeit sowie Datum und Uhrzeit erzeugen kann, wobei diese Daten (D) über die Position, die aktuelle Geschwindigkeit sowie Datum und Uhrzeit in den geschickten Daten enthalten sind,
- einen Schritt (E4) des Empfangens einer Signatur (S) der Daten (D) von dem Fahrtenschreiber (3),
- einen Schritt (E5) des Speicherns der Daten (D) und der Signatur und
- einen Schritt (E7) des Sendens der Daten (D) und der Signatur (S), die gespeichert worden sind, zu einer Prüfvorrichtung (5).

2. Speicherverfahren nach Anspruch 1, wobei der Schritt (E2) des Schickens von Daten (D) das Schicken wenigstens einer Nachricht (M₁, M0₁, M0₂, M0ₙ) zum Anfordern eines Angebots von Daten, die von wenigstens einem Teil der zu signierenden Daten begleitet wird, zu dem Fahrtenschreiber (3) umfasst.

3. Speicherverfahren nach Anspruch 2, wobei der Schritt (E2) des Schickens von Daten (D) das Schicken einer Nachricht (M₁) des Anforderns einer Übertragung einer Signatur für die Daten, die mit der wenigstens einen Nachricht des Anforderns eines Angebots von Daten geschickt werden, zu dem Fahrtenschreiber umfasst.

4. Computerprogramm, das Befehle enthält, um die Schritte des Speicherverfahrens nach Anspruch 1 auszuführen, wenn das Programm durch einen Computer ausgeführt wird.

5. Datenträger, der durch einen Computer lesbar ist und Befehle eines Computerprogramms nach Anspruch 4 enthält.

6. Anlage (2), die dazu bestimmt ist, in einem Fahrzeug (1) verbaut zu werden, und Folgendes umfasst:
- eine Positionierungsvorrichtung (24), die Daten (D) über die Position, die aktuelle Geschwindigkeit sowie Datum und Uhrzeit erzeugen kann;
- ein Modul zum Schicken von zu signierenden Daten (D) zu einem in einem Fahrzeug (1) verbauten Fahrtenschreiber (3), wobei die Daten durch eine Positionierungsvorrichtung (24) erzeugt werden und Daten (D) über die Position, die aktuelle Geschwindigkeit sowie Datum und Uhrzeit enthalten, wobei der Fahrtenschreiber (3) und die Anlage (2) verschiedene Vorrichtungen sind,
- ein Modul zum Empfangen einer Signatur (5) der Daten von dem Fahrtenschreiber (3),
- ein Modul zum Speichern der Daten (D) und der Signatur (5) und
- ein Modul zum Senden der Daten (D) und der Signatur (S), die gespeichert worden sind, zu einer Prüfvorrichtung (5).

7. Fahrzeug, das eine in ihm verbaute Anlage (2) nach Anspruch 6 und einen mit der Anlage verbundenen Fahrtenschreiber (3), der in dem Fahrzeug (1) verbaut ist, umfasst, wobei dieser Fahrtenschreiber Folgendes umfasst:
- ein Modul zum Empfangen von zu signierenden Daten (D) von der Anlage (2), wobei die Daten durch die Anlage erzeugt worden sind,
- ein Modul (34) zum Bestimmen einer Signatur (S) der Daten und
- ein Modul zum Schicken der Signatur (S) zu der verbauten Anlage;
wobei die Anlage (2) konfiguriert ist, die Daten (D) und die Signatur (S) zu einer Prüfvorrichtung (5) zu senden.

## Claims

1. Data storage method implemented by equipment (2) installed on board a vehicle (1), comprising:
- a step (E2) of sending data (D) to be signed to an electronic tachograph (3) installed on board said vehicle (1), said electronic tachograph (3) and said equipment (2) being distinct devices, said data (D) including data generated by a positioning device (24) that is included in said equipment (2) and is capable of generating position, instantaneous speed, date and time data (D), said position, instantaneous speed, date and time data (D) being included in said sent data,
- a step (E4) of receiving, from said electronic tachograph (3), a signature (S) of said data (D),
- a step (E5) of storing said data (D) and said signature, and
- a step (E7) of transmitting the stored data (D) and signature (S) to a verification device (5).

2. Storage method according to Claim 1, wherein the step (E2) of sending data (D) comprises sending, to the electronic tachograph (3), at least one data submission request message (M₁, M0₁, M0₂, M0ₙ) accompanied by at least some of the data to be signed.

3. Storage method according to Claim 2, wherein the step (E2) of sending data (D) comprises sending, to the electronic tachograph, a message (M₁) requesting the transfer of a signature for the data sent with said at least one data submission request message.

4. Computer program including instructions for executing the steps of the storage method according to Claim 1 when said program is executed by a computer.

5. Computer-readable information medium comprising instructions of a computer program according to Claim 4.

6. Equipment (2), which is intended to be installed on board a vehicle (1) and comprises:
- a positioning device (24) capable of generating position, instantaneous speed, date and time data (D);
- a module for sending data (D) to be signed to an electronic tachograph (3) installed on board said vehicle (1), said data having been generated by said positioning device (24) and comprising position, instantaneous speed, date and time data (D), said electronic tachograph (3) and said equipment (2) being distinct devices,
- a module for receiving, from said electronic tachograph (3), a signature (5) of said data,
- a module for storing said data (D) and said signature (5), and
- a module for transmitting the stored data (D) and signature (S) to a verification device (5).

7. Vehicle comprising on-board equipment (2) according to Claim 6 and an electronic tachograph (3) that is connected to said equipment and is installed on board said vehicle (1), said tachograph comprising:
- a module for receiving, from said equipment (2), data (D) to be signed, said data having been generated by said equipment,
- a module (34) for determining a signature (S) of said data, and
- a module for sending said signature (S) to said on-board equipment;
said equipment (2) being configured to transmit said data (D) and said signature (S) to a verification device (5).
